# FASCICULE DE BREVET EUROPEEN

(11) **EP 0 309 319 B1**
(45) Date de publication et mention de la délivrance du brevet: **09.11.1994**
(21) Numéro de dépôt: 88402323.5
(22) Date de dépôt: 15.09.1988
(51) Int. Cl.: F25D 3/11, B29C 47/88

(54) **Installation de refroidissement d'un produit extrudé en continu**
Anlage zum Kühlen eines kontinuierlich extrudierten Produktes
Equipment for cooling a continuously extruded product

(30) Priorité: 21.09.1987 FR 8713047
(43) Date de publication de la demande: 29.03.1989
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Lermuzeaux, André, F-94370 Sucy-en-Brie (FR); Barthelmes, Patrice, F-78180 Montigny-le-Bretonneux (FR)
(74) Mandataire: Vesin, Jacques

(56) Documents cités:
- EP-A- 0 001 391
- EP-A- 0 084 683
- EP-A- 0 135 106
- FR-A- 2 088 148
- FR-A- 2 160 319
- FR-A- 2 306 413
- US-A- 3 254 506
- US-A- 3 258 935
- US-A- 3 405 531
- US-A- 3 427 820
- US-A- 3 494 140
- US-A- 3 583 171
- US-A- 3 600 901
- US-A- 3 757 533

## Description

La présente invention concerne une installation de refroidissement en continu d'un produit extrudé ou formé de forme allongée, du type comprenant un caisson allongé à parois thermiquement isolées définissant un trajet intérieur comportant une zone amont, une zone centrale et une zone aval, un moyen de transport du produit le long du trajet, la zone centrale comportant un moyen de projection de fluide cryogénique sur le trajet du produit.

Une installation de refroidissement du type défini ci-dessus est décrite dans le document EP-A-0.084.683. Dans ce document, la zone aval est ascendante et munie d'un moyen de transport à vitesse augmentée, le refroidissement s'effectuant pour l'essentiel dans les zones centrale et amont dont l'ouverture d'entrée est typiquement surélevée par rapport au niveau de ces zones centrale et amont de façon à favoriser un maintien prononcé du fluide cryogénique vaporisé dans ces zones. De ce fait, tant les zones centrale et amont que la zone aval, ascendante, sont largement dimensionnées transversalement.

La présente invention a pour objet de proposer une installation de refroidissement de structure simple, avantageusement modulaire, permettant, pour une consommation finale de fluide cryogénique, un refroidissement de structure simple, avantageusement modulaire optimum et à une vitesse rapide de refroidissement, au moins égale à la vitesse de fabrication en continu du produit de forme allongée, avantageusement refroidi directement en sortie d'une extrudeuse ou d'une boudineuse.

Pour ce faire, dans l'installation selon l'invention, le trajet est rectiligne et défini dans une structure de fond en forme de U formant une gouttière de faible section dans laquelle s'étend une bande convoyeuse constituant le moyen de transport et qui est fermée de façon étanche par une structure supérieure formant couvercle amovible, et en ce que la structure de la zone centrale comporte un moyen de pulvérisation du fluide cryogénique sous forme liquide ou solide vers la bande convoyeuse.

Avec l'installation selon l'invention, le produit subit, dans la zone centrale, un refroidissement brusque par contact avec le fluide cryogénique pulvérisé sous forme liquide ou solide, le refroidissement étant initié, dans la zone amont, par convection avec le fluide cryogénique détendu provenant de la zone centrale, et terminé progressivement dans la zone aval, par convection à co-courant avec le gaz cryogénique détendu provenant de la zone centrale, la faible section de passage du gaz dans les zones amont et aval favorisant une mise en vitesse naturelle du gaz permettant, avec des quantités réduites de fluide cryogénique, des échanges thermiques optimaux avec le produit, même si celui-ci se déplace à une vitesse relativement importante.

Le document FR-A-2.160.319 décrit une installation de refroidissement où le fluide cryogénique passe tout d'abord dans une série d'échangeurs disposés le long du trajet, au-dessus du moyen de transport, le fluide cryogénique vaporisé issu de ces échangeurs étant distribué vers l'amont et vers l'aval pour former un milieu de transfert thermique entre le produit à refroidir et les divers échangeurs. Le procédé et l'installation décrits dans ce document se révèlent particulièrement onéreux tant en ce qui concerne les moyens mis en oeuvre que la consommation de fluide cryogénique, et ne conviennent pas au refroidissement rapide des produits.

Or, dans de nombreux domaines de l'industrie, en particulier dans le domaine alimentaire, on est amené à refroidir des produits fabriqués par extrusion, extrusion-cuisson, formage, co-extrusion ou co-extrusion-cuisson par exemple, juste à leur sortie de l'extrudeuse ou de la formeuse. La température à la sortie de ces machines est en général trop élevée pour réaliser directement sur le produit extrudé ou formé les traitements ultérieurs de coupage, d'emballage ou d'enduction.

Les zones de refroidissement selon l'invention étant démunies de moyens mécaniques de brassage du gaz, afin d'assurer un écoulement facile et rapide du gaz froid le long des produits à co- ou contre-courant, la section intérieure du U du caisson doit être adaptée à la taille du produit formé ou extrudé à refroidir, et représente typiquement environ 5 à 30 fois, plus particulièrement 11 à 15 fois, la section du produit.

Comme fluide cryogénique pulvérisé selon l'invention, on peut utiliser de l'azote ou de l'anhydride carbonique. Selon sa nature, le fluide est sous forme solide ou liquide après la pulvérisation et avant sa sublimation.

De préférence, dans la zone de refroidissement par pulvérisation, celle-ci a lieu à une distance telle que le fluide cryogénique entre en contact avec le produit sous forme liquide ou solide, mais de préférence sans accumulation de liquide ou de solide sur le produit.

Comme il apparait dans l'exemple, l'invention s'applique particulièrement aux produits coextrudés dans l'industrie alimentaire, où il faut intervenir rapidement pour refroidir le matériau externe et la garniture, faute de quoi les traitements ultérieurs, du type coupage, sont difficiles; de plus, un refroidissement externe partiel ne suffit pas, car compte tenu des coefficients thermiques, la garniture a tendance à rester chaude, et à rechauffer l'ensemble. Cependant l'invention est applicable dans d'autres domaines de l'industrie, par exemple dans le domaine des produits formés sous pression.

La longueur des zones de conversion et /ou de stabilisation, et le débit de fluide cryogénique, sont choisis en fonction de la température du produit extrudé ou coextrudé, de sa vitesse d'extrusion, des coefficients thermiques du (des) produit(s) (co-) extrudé (s) et de la température maximum de manipulation ultérieure.

Le dispositif selon l'invention et l'installation peuvent être mis en oeuvre et prévus en aval d'une extrudeuse ou formeuse produisant plusieurs produits parallèles ou en aval de plusieurs extrudeuses, ou formeuses. Les produits sont traités de la même façon. On peut alors prévoir une bande continue large ou plusieurs bandes continues parallèles, dont la largeur totale est sensiblement de même largeur que la largeur intérieure du caisson.

Le refroidissement est assuré par le gaz provenant de la détente du fluide, par convection. La faible section de passage du gaz permet la mise en vitesse des gaz qui atteint une valeur suffisante pour une convection suffisante. Il apparaît donc particulièrement important que l'étanchéîté soit réalisée, entre couvercle et fond de caisse et entre les portions, pour éviter la perte de gaz et donc de vitesse d'écoulement.

Un exemple de réalisation va maintenent être décrit au regard des dessins annexés sur lequel :
- la figure 1 représente une vue d'ensemble schématique partiellement en éclaté d'une installation conforme à l'invention;
- la figure 2 représente une coupe transversale d'une portion de l'installation.

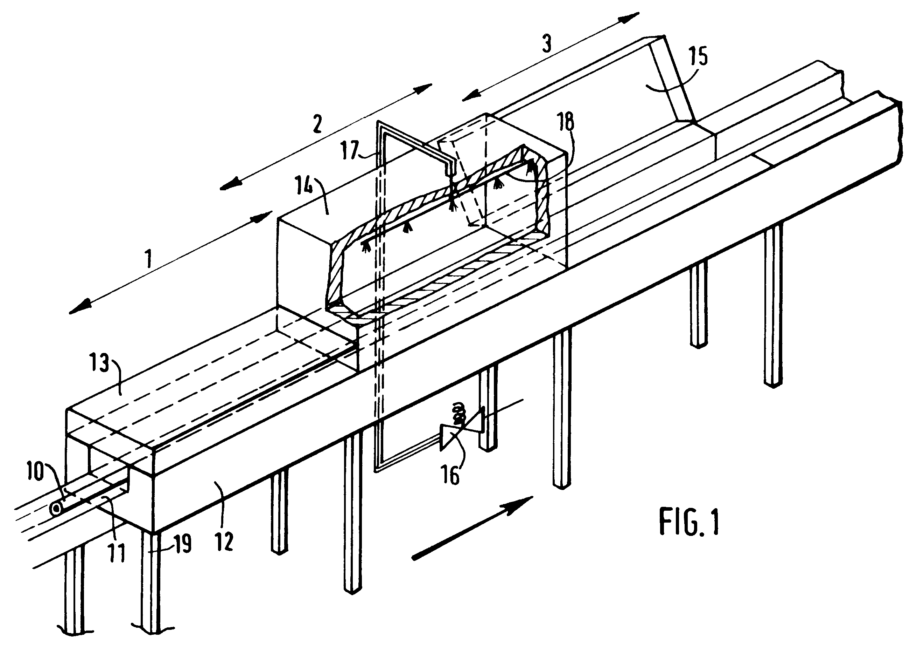

Le tunnel représenté à la figure 1 est déstiné au refroidissement en continu d'un produit coextrudé provenant en continu d'une extrudeuse non représentée en amont du tunnel dans le sens de l'extrusion (indiqué par une flèche). Ce tunnel horizontal, de forme générale allongée à section rectangulaire comporte trois zones ou portions 1,2,3.
Le produit 10 repose sur une bande 11 disposée au fond du tunnel sensiblement de même largeur que la largeur intérieure du tunnel. Cette bande est entrainée en translation en continu par des moyens non représentés, du type tambour d'entrainement animé par un moteur.

La bande 11 peut être en matériau fibre de verre recouvert de silicone, mais tout autre matériau souple et non collant au produit à basse température peut être utilisé.

Le tunnel est constitué d'un fond 12 à section en U, formant gouttière, où passe la bande 11, les différentes portions 1,2,3 étant déterminées par le couvercle (13,14,15) fermant le caisson à joint étanche.

Les parois du fond 12 et des couvercles 13,14,15 sont en matériau thermiquement isolant, utilisé de façon usuelle pour le matériel de refroidissement.

Dans les zones, comme les zones 1 et 3 où aucun fluide n'est distribué, les couvercles sont de simples parois planes ; et la zone 2 de refroidissement par pulvérisation comporte un couvercle en forme de caisson 14. Dans une autre forme de réalisation non représentée, la zone 2 comporte un couvercle plan équipé des moyens de distributions.

Une source de fluide cryogénique, non représentée, alimente, au travers d'une électrovanne 16, une canalisation 17 conduisant le fluide cryogénique jusqu'à la rampe 18 de distribution par des buses à l'interieur du caisson 14. La rampe 18 peut également être simplement trouée pour la distribution du fluide.

Les couvercles sont articulés le long du caisson à l'aide de charnières non représentées; le couvercle 13 est représenté en position fermée, le 15 en position ouverte. On peut dans une autre variante prévoir de les poser.

L'ensemble du tunnel repose sur des pieds 19, dont la hauteur est adaptée ou adaptable à la hauteur de sortie de l'extrudeuse.

Comme moyen d'étanchéité du tunnel dans sa longueur, on peut prévoir des joints en V de part et d'autre du passage libre du tunnel, des joints tubulaires plastiques ou élastiques coincés entre deux butées à l'extérieur du caisson. De préférence, on utilise un double système de joint pour assurer une complète étanchéité en gaz froid.

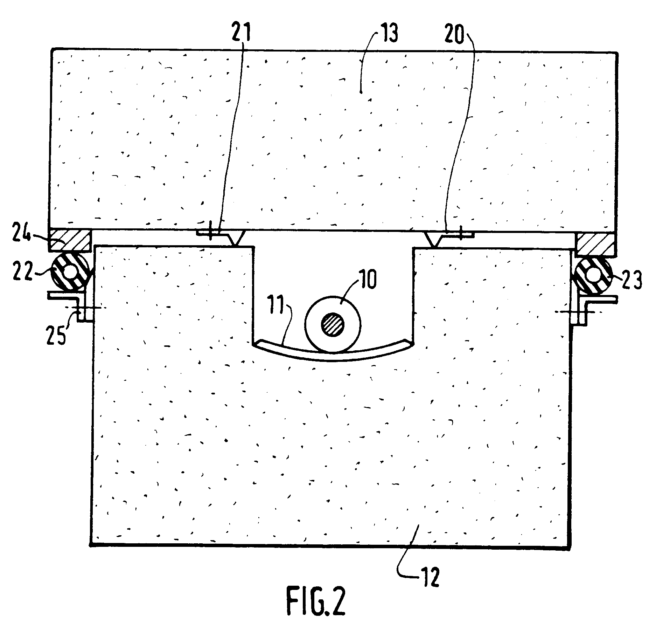

Ainsi, sur la figure 2 apparaissent le caisson en U 12, et le couvercle 13 reposant sur un double système de joints. D'une part des joints en V 20,21, de préférence métalliques, qui restent souples au froid sont disposés entre le couvercle et les parois supérieures du caissons en U.

D'autre part des joints cylindriques en matière plastique 22,23, qui assurent l'étanchéité par écrasement entre une butée 24 fixée sur le couvercle et un support 25 fixé au caisson.

D'autres moyens d'étanchéité connus sont envisageables.

### Exemple

Dans un dispositif selon l'invention, on a réalisé le refroidissement d'un biscuit fourré coextrudé à 0,32 m/s à 130°C à l'extérieur et 110°C à l'intérieur.

Les températures au tranchage doivent être de 60°C à l'extérieur et 40-50°C à l'intérieur.

Le diamètre du biscuit est de 13 à 14 mm, et celui du fourrage de 10 mm.

Le refroidissement est réalisé avec une installation telle qu'elle est décrite à la figure 1, la longueur de la zone 1 étant de 1 m, de la zone 2 de 2 m et de la zone 3 de 5 m, la section de passage faisant 4x5 cm².

Le matériel consomme 85 à 100 l/h de LN₂.

Le dispositif peut être mis en oeuvre pour des biscuits extrudés ou formés sous pression.

## Revendications

1. Installation de refroidissement en continu d'un produit extrudé ou formé de forme allongée (10), comprenant un caisson allongé (12) à parois thermiquement isolées définissant un trajet intérieur comportant une zone amont (1), une zone centrale (2) et une zone aval (3), un moyen (11) de transport du produit le long du trajet, la zone centrale (2) comportant un moyen (18) de projection de fluide cryogénique sur le trajet du produit, caractérisée en ce que le trajet est rectiligne et défini dans une structure de fond (12) en forme de U formant une gouttière de faible section dans laquelle s'étend une bande convoyeuse (11) constituant le moyen de transport et qui est fermée de façon étanche par une structure supérieure (13, 14, 15) formant couvercle amovible, et en ce que la structure de la zone centrale (2) comporte le moyen (18) de pulvérisation du fluide cryogénique, ledit moyen étant un moyen de pulvérisation sous forme liquide ou solide vers la bande convoyeuse (11).

2. Installation selon la revendication 1, caractérisée en ce que la bande convoyeuse (11) est continue et a sensiblement la même largeur que la gouttière.

3. Installation selon l'une des revendications 1 et 2, caractérisée en ce que la section de gouttière représente environ 5 à 30 fois la section du produit à refroidir (10).

4. Installation selon l'une des revendications 1 à 3, caractérisée en ce que la structure supérieure de la zone centrale (2) supporte une rampe (18) de pulvérisation de fluide cryogénique sous forme liquide ou solide.

5. Installation selon l'une des revendications 1 à 4, caractérisée en ce qu'au moins les structures supérieures (13, 15) des zones amont (1) et aval (3) sont planes et articulées latéralement sur le caisson (12).

6. Installation selon la revendication 5, caractérisée en ce que la structure supérieure (14) de la zone centrale (2) est en forme de caisson inversé (14) contenant la rampe de pulvérisation (18).

7. Installation selon l'une des revendications précédentes, caractérisée en ce que le fluide cryogénique est l'azote ou le dioxyde de carbone.

## Claims

1. Installation for continuously cooling an extruded or formed product with an elongate shape (10), comprising an elongate chamber (12) with thermally insulated walls defining an internal path including an upstream zone (1), a central zone (2) and a downstream zone (3), a means (11) for conveying the product along the path, the central zone (2) including a means (18) for spraying cryogenic fluid over the path of the product, characterised in that the path is rectilinear and defined in a U-shaped base structure (12) forming a channel with a small cross section in which a conveyor belt (11) constituting the conveying means extends and which is sealingly closed by a top structure (13, 14, 15) forming a removable cover, and in that the structure of the central zone (2) includes the means (18) for spraying the cryogenic fluid, the said means being a means of spraying in liquid or solid form towards the conveyor belt (11).

2. Installation according to Claim 1, characterised in that the conveyor belt (11) is continuous and has substantially the same width as the channel.

3. Installation according to one of Claims 1 and 2, characterised in that the cross section of the channel represents approximately 5 to 30 times the cross section of the product to be cooled (10).

4. Installation according to one of Claims 1 to 3, characterised in that the top structure of the central zone (2) supports a manifold (18) for spraying cryogenic fluid in liquid or solid form.

5. Installation according to one of Claims 1 to 4, characterised in that at least the top structures (13, 15) of the upstream (1) and downstream (3) zones are plane and hinged laterally on the chamber (12).

6. Installation according to Claim 5, characterised in that the top structure (14) of the central zone (2) is in the form of an inverted chamber (14) containing the spray manifold (18).

7. Installation according to one of the preceding claims, characterised in that the cryogenic fluid is nitrogen or carbon dioxide.

## Patentansprüche

1. Anlage zum kontinuierlichen Kühlen eines extrudierten oder in länglicher Form ausgebildeten Produktes (10) mit einem wärmeisolierte Wände aufweisenden länglichen Kasten (12), der einen innen liegenden Laufweg umgibt, der einen stromaufwärtigen Bereich (1), einen zentralen Bereich (2) und einen stromabwärtigen Bereich (3) umfaßt, mit einer Einrichtung (11) zum Fördern des Produkts längs des Laufweges, wobei der zentrale Bereich (2) eine Einrichtung (18) zum Spritzen eines Tieftemperaturfluides auf den Laufweg des Produktes umfaßt, dadurch gekennzeichnet, daß der Laufweg gerade ist und sich in einer U-förmigen Bodenstruktur (12) befindet, die eine Rinne kleinen Querschnitts bildet, in der ein Förderband (11) verläuft, das die Fördereinrichtung bildet, und die durch eine einen beweglichen Deckel bildende obere Struktur (13, 14, 15) dicht verschlossen ist, und daß die Struktur des zentralen Bereichs (2) die Einrichtung zum Zerstäuben und Sprühen des Tieftemperaturfluids in flüssiger oder fester Form gegen das Förderband (11) umfaßt, wobei die Einrichtung eine Zerstäubungseinrichtung ist.

2. Anlage nach Anspruch 1, dadurch gekennzeichnet, daß das Förderband (11) ein Endlosförderband ist und im wesentlichen dieselbe Länge wie die Rinne hat.

3. Anlage nach Anspruch 1 oder 2, dadurch gekennzeichnet, daß der Querschnitt der Rinne etwa den 5- bis 30-fachen Querschnitt wie das zu kühlende Produkt (10) hat.

4. Anlage nach einem der Ansprüche 1 bis 3, dadurch gekennzeichnet, daß die obere Struktur des zentralen Bereichs (2) eine Rampe (18) zum Zerstäuben des in flüssiger oder fester Form vorliegenden Tieftemperaturfluides trägt.

5. Anlage nach einem der Ansprüche 1 bis 4, dadurch gekennzeichnet, daß zumindest die oberen Strukturen (13, 15) der stromaufwärtigen (1) und stromabwärtigen (3) Bereiche eben und seitlich verschwenkbar auf dem Kasten angebracht sind.

6. Anlage nach Anspruch 5, dadurch gekennzeichnet, daß die obere Struktur (14) des zentralen Bereichs (2) in Gestalt eines umgekehrten Kastens (14) ausgebildet ist, der die Zerstäuberrampe (18) umfaßt.

7. Anlage nach einem der vorangehenden Ansprüche, dadurch gekennzeichnet, daß das Tieftemperaturfluid Stickstoff oder Kohlendioxyd ist.
